# EUROPÄISCHE PATENTANMELDUNG

(11) **EP 1 581 002 A1**
(43) Veröffentlichungstag der Anmeldung: **28.09.2005**
(21) Anmeldenummer: 04007183.9
(22) Anmeldetag: 25.03.2004
(51) Int. Cl.: H04N 7/18

(54) **Vorrichtung und Verfahren zur Bearbeitung von Videosignalen**

(71) Anmelder: Videte IT AG, 24118 Kiel (DE)
(72) Erfinder:
(74) Vertreter: Seemann, Ralph

(57) **Zusammenfassung**

Die Erfindung betrifft eine Vorrichtung zur Bearbeitung von Videosignalen mehrerer Videokameras (10 bis 13), mit mehreren den jeweiligen Videokameras (10 bis 13) zugeordneten Videosignaleingängen (20 bis 23), wobei wenigstens ein digitaler Signalprozessor (30 bis 33) vorgesehen ist, der wenigstens mittelbar mit wenigstens einem Videosignaleingang (20 bis 23) verbunden ist. Die Erfindung betrifft ferner ein Verfahren zur Bearbeitung von Videosignalen mehrerer Videokameras (10 bis 13).

Die erfindungsgemäße Vorrichtung zeichnet sich dadurch aus, dass jeweils jedem Videosignaleingang (20 bis 23) wenigstens ein digitaler Signalprozessor (30 bis 33) zugeordnet ist.

Das erfindungsgemäße Verfahren zeichnet sich durch die folgenden Verfahrensschritte aus:
- Bearbeiten der Videosignale jeder Videokamera (10 bis 13) in jeweils wenigstens einem digitalen Signalprozessor (30 bis 33),
- Weiterleiten der bearbeiteten Videosignale an eine Busbrücke (50), und
- Übergabe der bearbeiteten Videosignale an einen Computer-Bus (51).

## Beschreibung

Die Erfindung betrifft eine Vorrichtung zur Bearbeitung von Videosignalen mehrerer Videokameras, mit mehreren den jeweiligen Videokameras zugeordneten Videosignaleingängen, wobei wenigstens ein digitaler Signalprozessor vorgesehen ist, der wenigstens mittelbar mit wenigstens einem Videosignaleingang verbunden ist. Die Erfindung betrifft ferner ein Verfahren zur Bearbeitung von Videosignalen mehrerer Videokameras.

Eine derartige Vorrichtung ist beispielsweise aus der EP 01 105 122.4 der Anmelderin bekannt. Ferner sind eine entsprechende Vorrichtung und ein entsprechendes Verfahren aus der DE 43 22 356 A1 bekannt. In der genannten deutschen Patentanmeldung enthält ein System zur Codierung von Videosignalen einen Signalprozessor zur Segmentierung codierter Videodaten in Transportblöcke, die einen Vorsatzabschnitt und einen Abschnitt mit gepackten Daten aufweisen. Das System enthält ferner eine Rücksatzsteuereinrichtung, um nach einer globalen Systemrücksetzung rückgesetzte Zustände von Systembausteinen in einer vorgeschriebenen nichtsimultanen phasengesteuerten Folge zu lösen und dadurch zu erlauben, dass die Signalverarbeitung in der vorgeschriebenen Folge beginnt. Die Folge des phasengesteuerten Lösens der Rücksetzzustände beginnt, wenn gefühlt wird, dass gültige Daten die Datenleitungen durchlaufen.

Heutzutage werden Videosignale beispielsweise zur Überwachung von Räumen aufgezeichnet, gespeichert, verarbeitet und bearbeitet, wobei hier insbesondere bewegte Bilder und vorzugsweise Farbbilder verstanden werden. Ein Standard für die Bildsignale ist in der CCIR 656-Norm festgelegt. In Europa bedeutet dies 625 Zeilen pro Bild bei einer Rasterwechselfrequenz von 50 Hz. Damit das menschliche Auge ein flimmerfreies Videobild sieht, sollten wenigstens 50 Bildwechsel pro Sekunde im analogen Signalbereich erfolgen. Im digitalen Bildspeicherbereich hat sich das Halbbildverfahren durchgesetzt, so dass nur mit 25 Bildern pro Sekunde gearbeitet wird. Um mehrere Videosignale, beispielsweise Videosignale mehrerer Videokameras nahezu gleichzeitig einlesen zu können, gibt es im Stand der Technik verschiedene Möglichkeiten.

So können die Videosignale analog auf einen Videodecoder geschaltet werden, der üblicherweise ein Video A/D-Wandler ist. Dieser Wandler verarbeitet ein analoges Videosignal bzw. analoge Videosignale, z.B. zweier Kameras in digitale Signale im RGB- oder YUV-Format. Das digitale Signal wird dann zur Weiterverarbeitung einem digitalen Videokompressor übergeben.

Schaltet man die analogen Signale vor dem A/D-Wandler mittels eines Multiplexes um, so hat dieses Verfahren den Nachteil, dass während des Umschaltvorganges keine Bilddaten eingelesen werden können und der, insbesondere digitale, Bildstrom somit unterbrochen wird. Um die Bilder zu digitalisieren ist es notwendig, dass der Videodecoder immer wieder neu auf das aktive Videosignal einsynchronisiert wird. Dieses kann je nach Typ des Videodecoders von wenigen Millisekunden bis zu einer Sekunde dauern. Weitere Verzögerungen kommen durch die am Decoder anliegenden nicht miteinander synchronisierten Videosignale zustande. Da immer nur das erste bzw. das zweite Halbbild vom analogen Signal zum Digitalisieren eingelesen wird, kann nicht garantiert werden, dass beim Umschalten von einem Signal auf das zweite Signal genau der Anfang des Halbbildes anliegt, was gerade eingelesen werden soll. In diesem Fall muss bis zu 40ms auf das nächste Halbbild gewartet werden. Aus diesem Grund kann kein kontinuierlicher Datenstrom von jeweils 25 Bildern pro Sekunde pro Kamera bzw. Halbbildern pro Sekunde pro Kamera decodiert, komprimiert und verarbeitet werden. Im Durchschnitt können ca. 6 Bilder pro Sekunde durch analoge Umschaltung digital verarbeitet werden.

Bei dem Verfahren des digitalen Umschaltens wird jeweils ein Videodecoder bzw. A/D-Wandler pro analoges Videosignal eingesetzt. Hierdurch entfällt die Einsynchronisationszeit nach dem Umschalten, wodurch die zu bearbeitenden Bilder pro Sekunde sich erhöhen. Es muss allerdings immer noch aufgrund der Bearbeitung von ungeraden oder geraden Halbbildern von dem analogen Signal beim Umschaltvorgang von einem Signal zu einem weiteren Signal auf das entsprechende Halbbild gewartet werden, was wieder zu Verzögerungen von max. 40ms führt. Da das entsprechende Verfahren die einzelnen Videosignale sequenziell abarbeitet, kommt es zu einem Verlust von am System anliegenden Bilddaten. Es können durchschnittlich ca. 12 Bilder pro Sekunde durch digitale Umschaltung digital verarbeitet werden.

Demgegenüber ist es Aufgabe der vorliegenden Erfindung, eine Vorrichtung zur Bearbeitung von Videosignalen mehrerer Videokameras sowie ein Verfahren zur Bearbeitung von Videosignalen mehrerer Videokameras anzugeben, mittels dem effizient und ohne Datenverlust oder möglichst wenig Datenverlust die Videodaten bearbeitet werden können.

Gelöst wird diese Aufgabe durch eine Vorrichtung zur Bearbeitung von Videosignalen mehrerer Videokameras, mit mehreren den jeweiligen Videokameras zugeordneten Videosignaleingängen, wobei wenigstens ein digitaler Signalprozessor vorgesehen ist, der wenigstens mittelbar mit wenigstens einem Videosignaleingang verbunden ist, wobei jeweils jedem Videosignaleingang wenigstens ein digitaler Signalprozessor zugeordnet ist.

Durch diese Ausgestaltung der erfindungsgemäßen Vorrichtung wird eineindeutig jedem Videosignaleingang wenigstens ein digitaler Signalprozessor zugeordnet, wodurch eine parallele und effiziente Bearbeitung von Videosignalen ermöglicht ist. Im Rahmen der Erfindung umfasst der Begriff Videosignale insbesondere auch den Begriff Videoteilbilder und Videobilder. Durch Verwendung wenigstens eines digitalen Signalprozessors je Videosignaleingang wird, beispielsweise durch Bearbeitung in Form einer Kompression der Videodaten, ein PC-Bus System und auch die CPU, d.h. die zentrale Prozessoreinheit eines Computers, durch Bearbeitung von Videodaten weniger belastet, so dass dieser Flaschenhals beispielsweise in einer Videoüberwachungsvorrichtung nicht zum Tragen kommt.

Wenn stromabwärts des Videosignals, insbesondere unmittelbar, hinter dem jeweiligen Videosignaleingang ein A/D-Wandler angeordnet ist, können kostengünstige analoge Videokameras Verwendung finden. Ferner kann bereits installierte Videoüberwachungstechnik bzw. eine Videoüberwachungsvorrichtung weiter verwendet werden.

Vorzugsweise umfasst oder ist die erfindungsgemäße Vorrichtung eine Platine, insbesondere eine Steckplatine. Hierdurch kann ein allgemein übliches PC-System bzw. ein allgemein üblicher Computer ohne Probleme durch die entsprechende Vorrichtung erweitert werden. Hierdurch wird insbesondere die Vorrichtung auch sehr kostengünstig realisiert. Die Vorrichtung ist vorzugsweise auf einer Platine angeordnet bzw. ist eine Platine mit den entsprechenden Elementen. Zur Verbindung der Platine mit dem restlichen Computer ist ein Bussystem, insbesondere ein PCI-Bussystem vorgesehen.

Wenn die Anzahl der Videosignaleingänge eine gerade Zahl ist, ist eine effektive Ausnutzung der Signalwege möglich. Wenn wenigstens zwei serielle Signalverbindungen zwischen den digitalen Signalprozessoren und wenigsten einem die Videosignale aufbereitenden Baustein vorgesehen sind, ist eine sehr effiziente Übertragung der Videosignale bzw. schon bearbeiteten Videosignale möglich. Der die Videosignale aufbereitende Baustein ist vorzugsweise als eine Brücke zu einem Bussystem eines Computers, insbesondere einen PCI-Bus, ausgestaltet. Der die Videosignale aufbereitende Baustein kann auch ein Prozessor oder ein Hauptprozessor sein.

Eine besonders bevorzugte Ausführungsform, die eigenständigen erfinderischen Charakter hat, ist dergestalt, dass wenigstens zwei serielle Signalwege gleich lang sind oder dass die Leitungen der zwei Signalwege gleich lang sind. Hierdurch können ohne weitere Maßnahmen bearbeitete Videosignale zu einem eindeutigen Datenstrom zusammengestellt werden. Die seriellen Signalverbindungen umfassen insbesondere die seriellen Signalwege. Die seriellen Signalverbindungen sind vorzugsweise unidirektional. Insbesondere sind die seriellen Signalverbindungen für die Videosignale von den digitalen Signalprozessoren zu dem die Videosignale aufbereitenden Baustein unidirektional gerichtet.

Vorzugsweise sind die Videosignale über ein Zeitmultiplex über die seriellen Signalverbindungen übertragbar. Hierbei findet vorzugsweise eine zeitliche Verschachtelung mehrerer Signale über die Signalverbindungen statt. Eine gleichmäßige Auslastung der seriellen Signalverbindungen ist dann gegeben, wenn den Signaleingängen asymmetrisch die seriellen Signalverbindungen zugeordnet sind. Wenn beispielsweise vier Kameras an der Vorrichtung angeschlossen sind, werden die Signale der Kamera bzw. der bearbeiteten Videosignale eins und drei über eine Signalverbindung geleitet und die Signale der Kamera bzw. der bearbeiteten Videosignale zwei und vier über eine andere Signalverbindung. Hierdurch entsteht eine gleichmäßige Belastung der Signalverbindungen. Anschließend ist es möglich, über entsprechende Ports die Signale der Kameras bzw. die bearbeiteten Videosignale eins bis vier hintereinander in eine Schnittstelle eines Computers zu führen oder parallel einer Schnittstelle eines Computers zuzuführen. In einer besonders bevorzugten Ausführungsform der Erfindung ist jeder Signalprozessor ein einzelnes Bauelement. Hierdurch ist eine effektive Architektur der Vorrichtung möglich.

Die Aufgabe wird ferner durch ein Verfahren zur Bearbeitung von Videosignalen mehrerer Videokameras mit den folgenden Verfahrensschritten gelöst:
- Bearbeiten der Videosignale jeder Videokamera in jeweils wenigstens einem digitalen Signalprozessor,
- Weiterleiten der bearbeiteten Videosignale an eine Busbrücke, und
- Übergabe der bearbeiteten Videosignale an einen Computer-Bus.

Anschließend ist es dann möglich, die Videosignale auf einem Monitor darzustellen und/oder in einem Speicherelement abzuspeichern.

Vorzugsweise umfasst das Bearbeiten der Videosignale ein Komprimieren. Hierdurch ist es möglich, eine große Anzahl von Videosignalen bzw. Videosignale vieler Videokameras zu bearbeiten und weiterzuleiten.

Vorzugsweise umfasst das Bearbeiten der Videosignale eine Bewegungserkennung bzw. eine Aktivitätserkennung. Hierzu wird insbesondere Bezug genommen auf die EP 01 105 122.4 der Anmelderin. Die Offenbarung dieser europäischen Patentanmeldung (EP 01 105 122.4) soll vollumfänglich in die Offenbarung dieser Patentanmeldung aufgenommen sein. Bei der Bewegungserkennung bzw. Aktivitätserkennung im Rahmen der Erfindung werden Differenzbilder von je zwei aufeinander folgenden Bildern der Folge von Bilddaten je einer Videokamera oder von einem Bild der Folge von Videobildern zu einem Referenzbild erzeugt, wobei bei Überschreiten eines vorgebbaren Wertes der Differenz von Helligkeitswerten oder der Differenz im Farbraum eines vorgebbaren Bereichs des Bildes ein Alarmkriterium erfüllt ist, womit insbesondere eine Bewegungserkennung gemeint ist. Es wird vorzugsweise zudem eine automatische Maske ausgebildet, um während einer Bewegungserkennung bzw. einer Aktivitätserkennung Fehlalarme zu verringern. Bspw. kann so die Bewegung eines Baums bei Wind ausgeblendet werden. In dem in der eben genannten europäischen Patentanmeldung vorgesehenen Videoüberwachungssystem werden Bilder aufgezeichnet, die vor Erfüllung des Alarmkriteriums aufgenommen wurden, und zwar eine vorgebbare Anzahl sowie eine vorgebbare Anzahl von aktuellen Bildern in der Speichereinheit gespeichert, wobei insbesondere in einem ersten Zeitabschnitt sowohl aktuelle Bilddaten und gespeicherte Bilddaten auf der Anzeigeeinrichtung darstellbar sind, als auch aktuelle Bilddaten in der Speichereinheit speicherbar sind. Ein derartiges Videoüberwachungssystem bzw. ein derartiges Verfahren zur Überwachung mittels Videokameras kann das erfindungsgemäße Verfahren oder die erfindungsgemäße Vorrichtung vorzugsweise verwenden.

Vorzugsweise umfasst das Bearbeiten der Videosignale eine Kennzeichenerkennung und insbesondere vorzugsweise eine Kfz-Kennzeichenerkennung. Hierzu werden in Form von Bildern Kennzeichen, insbesondere Kfz-Kennzeichen, aufgenommen und mittels einer sogennannten OCR-Software in erkannte Buchstaben und Zahlen oder Zeichen umgewandelt, die dann in entweder der erfindungsgemäßen Vorrichtung oder in einem mit der Vorrichtung verbundenen Computer weiterverarbeitet werden können. Es ist auch möglich, dass das Erkennen eines Kfz-Kennzeichens ein Alarmkriterium für das Aufnehmen bzw. Speichern von Videobildern darstellt.

Vorzugsweise geschieht das Weiterleiten des bearbeiteten Signals über wenigstens zwei serielle Signalwege. Hierdurch kann eine wenigstens doppelt so große Anzahl von bearbeiteten Videobildern ohne Datenverlust weitergeleitet werden, als über einen seriellen Signalweg. Es ist auch möglich, dass ein serieller Signalweg für die Videobilder für die Weiterleitung der Videobilder bzw. bearbeiteten Videobilder Verwendung findet und ein zweiter serieller Signalweg für die Weiterleitung beispielsweise eines Alarmkriteriums oder eines Kfz-Kennzeichens oder eines anderen Kennzeichens. Vorzugsweise werden ausschließlich Videodaten über die seriellen Signalwege geleitet. Dieses bedeutet im Gegensatz zur DE 43 22 356 A1, dass insbesondere keine vor- und nachgeordneten Daten, die zur Kommunikation der Daten in den verschiedenen Bauelementen dienen, Verwendung finden, sondern lediglich Header und Checksummen mit übertragen. Es werden lediglich Videodaten, also insbesondere Videobilder, komprimierte Videobilder, Daten zur Bewegungserkennung oder Alarmdaten, Daten zur Kennzeichenerkennung und Header und Checksummen, beispielsweise über die seriellen Signalwege, geleitet. Im Rahmen der Erfindung umfasst der Begriff Videodaten insbesondere auch Daten wie Bewegungserkennungskoordinaten, Differenzbilder von Videobildern, adaptive und permanente Masken. Vorzugsweise werden die Videodaten mittels eines Zeitmultiplex über die seriellen Signalwege weitergeleitet. Hierdurch ist es möglich, eine effiziente Weiterleitung der Videodaten oder bearbeiteten Videodaten vorzusehen.

Vorzugsweise ist ein Bauelement, das stromabwärts der seriellen Signalwege angeordnet ist und in das die seriellen Signalwege enden, als Master für den Clock und die Frame-Synchronisation vorgesehen. Hierdurch ist eine eindeutige Zuordnung der Zeit und der Größe der über die Signalwege zu leitenden Videodaten gegeben, so dass kein Konflikt der Videodaten verschiedener Videokameras bzw. verschiedener digitaler Signalprozessoren entsteht.

Eine gleichmäßige Auslastung der seriellen Signalwege ist dann gegeben, wenn die Videodaten gleichmäßig auf die seriellen Signalwege verteilt werden.

Die Erfindung wird nachstehend ohne Beschränkung des allgemeinen Erfindungsgedankens anhand von Ausführungsbeispielen unter Bezugnahme auf die Zeichnungen beschrieben. Bezüglich aller im Text nicht näher erläuterten erfindungsgemäßen Einzelheiten wird ausdrücklich auf die Zeichnungen verwiesen. Es zeigen:
- Fig. 1: ein schematisches Blockschaltbild einer erfindungsgemäßen Vorrichtung,
- Fig. 2: eine Tabelle betreffend die Verteilung von Daten auf serielle Signalverbindungen.

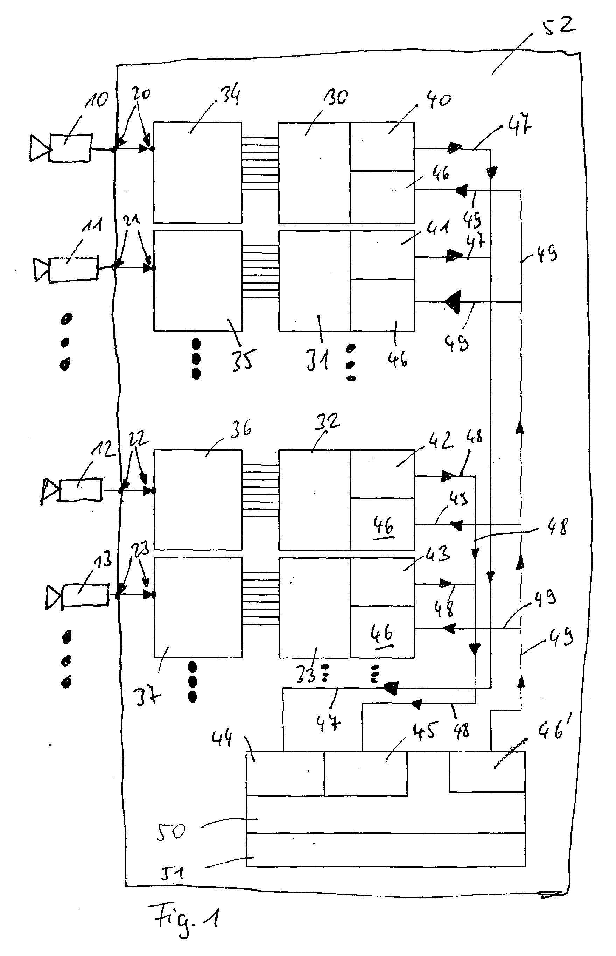

Fig. 1 zeigt ein schematisches Blockschaltbild einer erfindungsgemäßen Vorrichtung zur Bearbeitung oder Verarbeitung von Videosignalen mehrerer Videokameras. Die Videokameras sind mit den Bezugsziffern 10 bis 13 dargestellt. Es können allerdings auch weitere Videokameras Verwendung finden, beispielsweise anstelle der dargestellten vier Videokameras auch acht Videokameras oder zwölf oder sechzehn oder eine andere Anzahl. Die Möglichkeit, dass die entsprechenden Elemente in Fig. 1 mehrfach vorgesehen sind, ist durch die jeweils drei Punkte unterhalb der jeweiligen Elemente angedeutet.

Die erfindungsgemäße Vorrichtung ist beispielsweise auf einer Platine 52 angeordnet. Die Platine 52 kann als Steckplatine ausgebildet sein, wobei dann entsprechende Steckverbindungen vorgesehen sein müssen, die in Fig. 1 nicht dargestellt sind. Es handelt sich vorzugsweise um eine PCI-Karte, die das Verfahren der parallelen Signalverarbeitung mit Hilfe von digitalen Signalprozessoren nutzt. Die Kameras 10 bis 13 sind jeweils an entsprechenden Signaleingängen 20 bis 23 angeschlossen. Es handelt sich in diesem Ausführungsbeispiel um analoge Videosignale, die zunächst mittels jeweils eines A/D-Wandlers 34 - 37 in digitale Signale umgewandelt werden. Diese digitalen Signale gelangen dann in jeweils einen Signalprozessor 30 - 33, in dem die Daten beispielsweise komprimiert werden, und zwar vorzugsweise in ein MPEG 4 Format oder ein anderes geeignetes digitales Videoformat.

Die komprimierten Videosignale werden dann über einen seriellen Port 40, 41, 42, und 43 auf entsprechenden Signalwegen in Form serieller Signalwege 47 und 48 geleitet.

Die entsprechenden komprimierten Datensignale gelangen dann zu seriellen Ports 44 und 45, die an ein Bauelement 50 Daten übergeben. Das Bauelement 50 dient als Brücke zu beispielsweise einer PCI-Schnittstelle 51. Die digitalen Signal prozessoren 30 - 33 werden über einen seriellen Busport 46', der Steuersignale über einen seriellen Datenweg 49 leitet, die in den seriellen Ports 46 enden, entsprechend gesteuert. Eine genauere Beschreibung folgt unten stehend.

Die erfindungsgemäße Vorrichtung hat in der Ausführungsform mit acht digitalen Signalprozessoren vorzugsweise die folgenden Eigenschaften. Im Videobereich weist die Vorrichtung bzw. die Platine 52 oder die Karte 52 acht analoge Videosignalanschlüsse 20-23 auf. Es können bis zu 25 Halbbilder pro Sekunde pro Kamerasignal verarbeitet werden. Den acht digitalen Signalprozessoren 30-33 ist jeweils ein A/D-Wandler 34-37 vorgeschaltet. In dem jeweiligen digitalen Signalprozessor 30-33, von denen auch acht vorgesehen sind, ist eine integrierte Bewegungserkennung vorgesehen, d.h. es werden aufeinander folgende Bilder im Hinblick auf wenigstens einen Bereich der Bilder auf Änderungen in der Helligkeit oder im Farbraum untersucht, beispielsweise durch Differenzbildbildung. Es geschieht ferner eine Komprimierung der Bilddaten durch jeden digitalen Signalprozessor 30-33 in beispielsweise das MPEG 4 Format. Ferner ist die Terminierung schaltbar, d.h. die Endwiderstände sind schaltbar. Die Ausgänge umfassen vorzugsweise vier umschaltbare Videoausgänge und eine Schnittstelle für passiven und aktiven achtfach Video-Loop, beispielsweise für den Anschluss zu einem analogen Monitor. Es existieren ferner noch acht Alarmeingänge und ein Alarmausgang sowie ein Watch-Dog. Ferner ist die Firmware über einen PCI-Bus und beispielsweise über ein LAN/WAN upgradefähig.

Jedes analoge Videosignal einer Videokamera 10-13 wird über einen Video-A/D-Wandler 34-37 an einen digitalen Signalprozessor 30-33 beispielsweise des Typs AD 21533 Blackfin® oder ADSP BF 533 Blackfin® der Firma Analog Devices bzw. des Typs ADSP 21533 Blackfin® der Firma Analog Devices, die zum Anmeldezeitpunkt auch ADSP BF533 genannt werden, verwendet. Mittels des digitalen Signalprozessors 30-33 wird eine Bewegungserkennung beispielsweise in Ausführung von Differenzbildern durchgeführt. Ferner werden sämtliche Bilder der Kameras mittels eines MPEG 4 Simple Profile komprimiert und an die PCI-Schnittstelle 51 übermittelt. Die Daten werden dann zum Speichern oder zur Weiterverarbeitung über den PCI-Bus an die CPU eines Computers gesendet. Neben der Bewegungserkennung und der MPEG 4 Kompression können auch andere Videodatenverarbeitungsalgorithmen, wie Kennzeichenerkennung oder andere Kompressionsverfahren wie JPEG 2000, eingesetzt werden. Die eingesetzten digitalen Signalprozessoren 30-33 zeichnen sich durch eine Spezialisierung auf digitale Bildverarbeitung, eine hohe Taktfrequenz von 600 MHz und einen sehr geringen Leistungsbedarf von gerade 300 mW aus. Hierdurch ist es ohne Probleme möglich, wenigstens acht der digitalen Signalprozessoren 30-33 auf einer PCI-Platine 52 zu betreiben, ohne dass eine zu hohe Wärme entsteht.

Der von den digitalen Prozessoren 30-33 erzeugte digitale komprimierte Bildstrom wird jeweils über einen seriellen Port 40-43, von denen auch acht vorgesehen sind, einem mit bis zu 66 MHz getakteten seriellen High-Speed Bus 47, 48 an ein Bauelement 50, das eine so genannte PCI Bridge AD 21535 Blackfin® bzw. ADSP BF 533 Blackfin® der Firma Analog Devices ist, übertragen. Durch die Verwendung von acht digitalen Signalprozessoren, von denen vier in der Fig. 1 dargestellt sind, können acht Videosignale parallel bearbeitet werden. Die digital bearbeiteten Signale werden unidirektional transportiert. Der umgekehrte Signalweg zur Steuerung der digitalen Signalprozessoren 30-33 erfolgt über einen seriellen Busport 46', der eine etwas langsamere serielle Verbindung sein kann.

Die A/D-Wandler 34-37 senden jeweils die digitalen Bilddaten in Form eines ITU-R BT.656 Protokolls an das jeweilige parallele Interface der digitalen Signalprozessoren 30-33. Die parallele Übergabe ist durch mehrere Verbindungen in Fig. 1 dargestellt. Die bearbeiteten Bilddaten werden über die seriellen Ports 40 - 43 an das Bauelement 50 gesendet. Von dort aus werden die Daten über die PCI-Schnittstelle 51 dem PCI Bus eines PCs übermittelt. Es ist möglich, Konfigurationsdaten von dem Bauelement 50 über den seriellen Busport 46' an einen ausgewählten digitalen Signalprozessor 30-33 zu senden. Das Bauelement 50 verfügt über zwei serielle Ports 44 und 45 zum Empfang der übermittelten bearbeiteten Videodaten. Es werden allerdings acht Folgen bzw. Ströme von Videodaten an zwei serielle Ports 44 und 45 übertragen. Hierzu werden jeweils nur vier digitale Signalprozessoren, von denen in dem Ausführungsbeispiel der Fig. 1 nur zwei jeweils dargestellt sind, an jeweils einen seriellen Port 44 bzw. 45 angeschlossen bzw. mit diesen verbunden. Aufgrund der hohen Taktfrequenz von 66 MHz sind die seriellen Datenverbindungen in Form der seriellen Ports 40 - 45 sowie der seriellen Datenwege 47 und 48 nicht vollständig ausgelastet, so dass noch Übertragungsbandbreite für weitere Aufgaben zur Verfügung stünden. Da jeweils vier bzw. in Fig. 1 dargestellt nur zwei digitale Signalprozessoren über einen seriellen Port bzw. über eine serielle Schnittstelle 44 bzw. 45 Daten an das Bauelement 50 senden, wird in dem Ausführungsbeispiel, das gewählt wurde, ein Zeitmultiplexverfahren eingesetzt.

Es wird jedem digitalen Signalprozessor eine bestimmte Zeit zur Verfügung gestellt, um die komprimierten Bilddaten an das Bauelement 50 zu senden. Jedem digitalen Signalprozessor 30-33 wird ein Kanal von eins bis vier bzw. in dem Ausführungsbeispiel der Fig. 1, wenn nur vier Kameraanschlüsse vorhanden sind und vier digitale Signalprozessoren Verwendung finden, ein Kanal von eins bis zwei zugeteilt. Sobald der entsprechende digitale Signalprozessor 30 - 33 mit dem Senden von Daten an der Reihe ist, können 32 Bit über die seriellen Ports 40 - 45 bzw. die seriellen Datenwege 47 und 48 gesendet werden. Es können auch mehr oder weniger als 32 Bit gesendet werden. Diese hängt von der jeweiligen Konfiguration ab. In diesem Ausführungsbeispiel wird allerdings von 32 Bit eingegangen. Der andere digitale Signalprozessor beispielsweise 31 und 33 bzw. im Falle von acht digitalen Signalprozessoren jeweils die anderen drei, können während dieser Zeit keine Daten senden. Jedem Kanal wird im Falle des Ausführungsbeispiels der Fig. 1 ein Wert von eins bis zwei zugewiesen bzw. bei acht digitalen Signalprozessoren ein Wert von eins bis vier.

In diesem Betriebsmodus ist das Bauelement 50 der Master für den Clock und die Frame-Synchronisation. Die jeweiligen digitalen Signalprozessoren 30-33 zählen alle Frame-Clock Signale vom Master 50 mit. Sobald der erste Frame gesendet wurde, erkennt der digitale Signalprozessor 30-33, der auf den Kanal eins gesetzt wurde, dass er mit dem nächsten Clock-Signal die Daten senden darf. Für die nächsten zweiunddreißig Clock-Impulse darf nur Kanal eins senden. Alle anderen Kanäle zählen die Clock-Signale mit. Nach zweiunddreißig Clocks wird der Kanal eins deaktiviert und Kanal zwei darf die nächsten zweiunddreißig Signale senden usw. Erfolgt der nächste Frame-Impuls, wird wieder von vorn mit dem digitalen Signalprozessor 30 - 33 vom Werte eins begonnen.

Durch dieses Kommunikationsprotokoll ist es möglich, die Bilddaten ohne großen Speicheraufwand in den digitalen Signalprozessoren 30-33 schnell an das Bauelement 50 zu senden. Da nur wenig Speicheraufwand bei dem vorzugsweisen Kommunikationsprotokoll Verwendung findet, können auch digitale Signalprozessoren benutzt werden, die einen geringen Cach-Speicher aufweisen.

Die Übertragung kann vorzugsweise in einem so genannten DMA-Modus (Direct Memory Access) erfolgen. Dieses bedeutet, dass der DMA-Controller des digitalen Signalprozessors den Datenzugriff als alleiniger Master steuert. Bei einem anderen Datenzugriff würde die Address-Unit des Signalprozessors den Datenzugriff steuern. Die letzte Alternative ist allerdings Zeit aufwändiger.

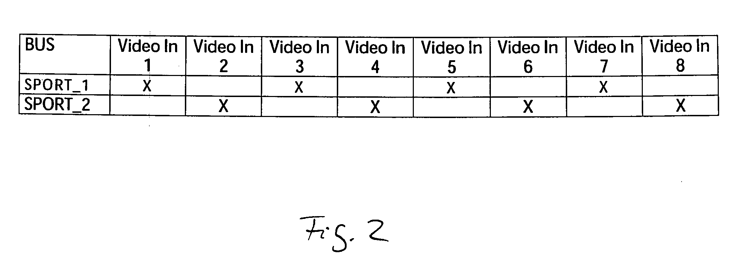

Die in Fig. 2 gezeigte Tabelle zeigt die Verteilung der acht digitalen Signalprozessoren in dem vorzugsweise verwendeten Ausführungsbeispiel, wovon in Fig. 1 nur vier dargestellt sind, auf die seriellen Portschnittstellen 44 und 45 bzw. 47 und 48.

Die verwendete asymmetrische Verteilung der Videosignale hat den Vorteil, dass bei einem Anschluss von weniger als acht Kameras die beiden seriellen Signalverbindungen 40-45, 47 und 48 gleichmäßig belastet werden.

Der serielle Busport 46' und der serielle Datenweg 49 sowie die seriellen Busports 46 dienen als Kommunikationsbus zwischen dem Master (Bauelement 50) und den einzelnen Slaves (digitale Signalprozessoren 30-33). Hierdurch können die digitalen Signalprozessoren 30-33 Befehle zur Steuerung erhalten. Es können auch auf diesem Weg Daten zu den Analog-/Digitalwandlern 34-37 durchgereicht werden, um beispielsweise Helligkeits- oder Farbeinstellungen der einzelnen Kameras zu verändern. Ferner können über dieses Bussystem die digitalen Signalprozessoren 30-33 gebootet werden. Dieses sollte möglichst nur einmal am Anfang beim Start der erfindungsgemäßen Vorrichtung geschehen. Es ist auch möglich, jeweils die digitalen Signalprozessoren 30-33 alleine oder zusammen zurück zu setzen (Reset), wobei die restlichen Signalwege nicht beeinflusst werden.

### Bezugszeichenliste

- 10 - 13: Videokamera
- 20 - 23: Signaleingang
- 30 - 33: Signalprozessor
- 34 - 37: A/D-Wandler
- 40 - 45: serieller Port
- 46, 46': serieller Busport
- 47-49: serieller Datenweg
- 50: Bauelement
- 51: PCI-Schnittstelle
- 52: Platine
- Sport 1: serieller Port 1
- Sport 2: serieller Port 2

## Patentansprüche

1. Vorrichtung zur Bearbeitung von Videosignalen mehrerer Videokameras (10 bis 13), mit mehreren den jeweiligen Videokameras (10 bis 13) zugeordneten Videosignaleingängen (20 bis 23), wobei wenigstens ein digitaler Signalprozessor (30 bis 33) vorgesehen ist, der wenigstens mittelbar mit wenigstens einem Videosignaleingang (20 bis 23) verbunden ist, **dadurch gekennzeichnet, dass** jeweils jedem Videosignaleingang (20 bis 23) wenigstens ein digitaler Signalprozessor (30 bis 33) zugeordnet ist.

2. Vorrichtung nach Anspruch 1, **dadurch gekennzeichnet, dass** stromabwärts des Videosignalwegs, insbesondere unmittelbar, hinter dem jeweiligen Videosignaleingang (20 bis 23) ein A/D-Wandler (34 bis 37) angeordnet ist.

3. Vorrichtung nach Anspruch 1 oder 2, **dadurch gekennzeichnet, dass** diese eine Platine (52), insbesondere eine Steckplatine, umfasst oder ist.

4. Vorrichtung nach einem oder mehreren der Ansprüche 1 bis 3, **dadurch gekennzeichnet, dass** die Anzahl der Videosignaleingänge (20 bis 23) eine gerade Zahl ist.

5. Vorrichtung nach einem oder mehreren der Ansprüche 1 bis 4, **dadurch gekennzeichnet, dass** wenigstens zwei serielle Signalverbindungen (40 bis 45, 47, 48) zwischen den digitalen Signalprozessoren (30 bis 33) und wenigstens einem die Videosignale aufbereitenden Baustein (50) vorgesehen sind.

6. Vorrichtung nach Anspruch 5, **dadurch gekennzeichnet, dass** die wenigstens zwei seriellen Signalverbindungen (40 bis 45, 47, 48) wenigstens zwei serielle Signalwege (47, 48) mit Leitungen umfassen, die gleich lang sind.

7. Vorrichtung nach Anspruch 5 oder 6, **dadurch gekennzeichnet, dass** die seriellen Signalverbindungen (40 bis 45, 47, 48) unidirektional sind.

8. Vorrichtung nach einem oder mehreren der Ansprüche 5 bis 7, **dadurch gekennzeichnet, dass** die Videosignale mittels eines Zeitmultiplex über die seriellen Signalverbindungen (40 bis 45, 47, 48) übertragbar sind.

9. Vorrichtung nach einem oder mehreren der Ansprüche 5 bis 8, **dadurch gekennzeichnet, dass** den Signaleingängen (20 bis 23) asymmetrisch die seriellen Signalverbindungen (40 bis 45, 47, 48) zugeordnet sind.

10. Vorrichtung nach einem oder mehreren der Ansprüche 1 bis 9, **dadurch gekennzeichnet, dass** jeder digitale Signalprozessor (30 bis 33) ein einzelnes Bauelement ist.

11. Verfahren zur Bearbeitung von Videosignalen mehrerer Videokameras (10 bis 13) mit den folgenden Verfahrensschritten:
- Bearbeiten der Videosignale jeder Videokamera (10 bis 13) in jeweils wenigstens einem digitalen Signalprozessor (30 bis 33),
- Weiterleiten der bearbeiteten Videosignale an eine Busbrücke (50), und
- Übergabe der bearbeiteten Videosignale an einen Computer-Bus (51).

12. Verfahren nach Anspruch 11, **dadurch gekennzeichnet, dass** das Bearbeiten der Videosignale ein Komprimieren umfasst.

13. Verfahren nach Anspruch 11 oder 12, **dadurch gekennzeichnet, dass** das Bearbeiten der Videosignale eine Bewegungserkennung umfasst.

14. Verfahren nach einem oder mehreren der Ansprüche 11 bis 13, **dadurch gekennzeichnet, dass** das Bearbeiten der Videosignale eine Kennzeichenerkennung umfasst.

15. Verfahren nach einem oder mehreren der Ansprüche 11 bis 14, **dadurch gekennzeichnet, dass** das Weiterleiten des bearbeiteten Signals über wenigstens zwei serielle Signalwege (47, 48) geschieht.

16. Verfahren nach Anspruch 15, **dadurch gekennzeichnet, dass** ausschließlich Videodaten über die seriellen Signalwege (47, 48) geleitet werden.

17. Verfahren nach Anspruch 15 oder 16, **dadurch gekennzeichnet, dass** die Videodaten mittels eines Zeitmultiplex über die seriellen Signalwege (47, 48) weitergeleitet werden.

18. Verfahren nach einem oder mehreren der Ansprüche 15 bis 17, **dadurch gekennzeichnet, dass** ein Bauelement (50), das stromabwärts der seriellen Signalwege (47, 48) angeordnet ist und in die die seriellen Signalwege (47, 48) enden, als Master für den Clock und die Frame-Synchronisation vorgesehen ist.

19. Verfahren nach einem oder mehreren der Ansprüche 15 bis 18, **dadurch gekennzeichnet, dass** die Videodaten gleichmäßig auf die seriellen Signalwege (47, 48) verteilt werden.
